**Europäisches Patentamt**

(19) **European Patent Office**

**Office européen des brevets**

(11) Publication number: **0 331 297 B1**

(12) **EUROPEAN PATENT SPECIFICATION**

(45) Date of publication of patent specification :
12.06.91 Bulletin 91/24

(51) Int. Cl.⁵ : **F16L 5/02**

(21) Application number : **89301206.2**

(22) Date of filing : **08.02.89**

(54) Expanding device.

(30) Priority : **08.02.88 GB 8802764**
**16.02.88 GB 8803529**
**11.03.88 GB 8805791**

(43) Date of publication of application :
**06.09.89 Bulletin 89/36**

(45) Publication of the grant of the patent :
**12.06.91 Bulletin 91/24**

(84) Designated Contracting States :
**AT BE CH DE ES FR GB IT LI NL SE**

(56) References cited :
**EP-A- 0 179 657**
**DE-A- 2 609 088**

(73) Proprietor : **N.V. RAYCHEM S.A.**
**Diestsesteenweg 692**
**B-3200 Kessel-lo (BE)**

(72) Inventor : **Vandeputte, Filip Willy Antoon**
**Berkendreef 2**
**B-3128 Baal (BE)**
Inventor : **Vansant, Jan Lodewijkgh M.F.G.**
**Minneveld 2**
**B-3040 Leuven (BE)**

(74) Representative : **Benson, John Everett et al**
**Raychem Limited Intellectual Property Law**
**Department Faraday Road Dorcan**
**Swindon, Wiltshire SN3 5HH (GB)**

## Description

The present invention relates to a device suitable for expanding a sealing sleeve. It finds particular application as a device for expanding a sealing sleeve for sealing a space between an elongate substrate and a passage through which it passes.

One application where a seal is desirable between an elongate substrate and a passage is where the passage is a hole in a wall or other bulkhead, and the substrate is a feedthrough. A "feedthrough" is a term well known in the art. It typically describes a hollow member which is pre-installed in a hole in the wall or bulkhead to provide a conduit for later installation of cables or supply-lines through the wall. For such an application the seal is known as a "feedthrough seal".

Another application where a seal is required between a substrate and an elongate passage is where the passage is a duct, and the substrate is a cable or supply-line passing through the duct. In this case the seal between the duct and the substrate is known as a "duct seal".

The reason for the seal in both the above applications is to prevent the ingress of water, dirt or other contaminants.

Many existing feedthrough and duct seals are known in the prior art. Simple solutions include the use of wrapped tape, adhesives and mastics. More complex seals are also known and two are now described.

UK 1594937 (Raychem) describes a duct seal comprising annular, sealant-coated flanges at one end, that are deformable by heat. The duct seal is heated and then pushed into the duct, the deformation of the flanges being made possible by the heating step. After insertion into the duct the other end of the duct seal (which is tubular, heat-shrinkable, and projects from the duct) is heated by a heat gun or torch and therby shrinks into sealing contact with a supply line passing through the duct. The seal is made to the duct by the deformed flanges. The duct seal must therfore be made with flanges of diameter greater than that of the duct. This may hinder installation in some circumstances.

Another duct seal is described in European Patent Application 85307664.4 Publication no. 0179657 (Raychem). The exemplified embodiment there comprises a tubular sealing member in combination with a wrapped cylindrical spring biassing member positioned within the sealing member. The spring biassing member is operated after positioning of the sealing member in the duct to urge the sealing member into contact with the duct. Since the sealing is activated after positioning of the duct seal, the duct seal can be made smaller than the duct, allowing easy insertion and positioning.

The present invention provides a device which is suitable for expanding a sealing sleeve for sealing a space between an elongate substrate and a passage through which it passes. The device is suitable for use as a feedthrough or duct seal. The resultant seal embodies the features of easy insertion and positioning exemplified by European Patent Application 85307664.4 (Raychem), but uses a different method for urging the sealing sleeve into contact with the surrounding passage. In one embodiment the step of sealing the sleeve to the substrate passing through the passage activates the expansion of the sealing sleeve into contact with the passage.

One aspect of the invention provides a device suitable for expanding a sealing sleeve comprising :

(a) an annular ring which can be positioned inside the sleeve and

(b) a plurality of bars pivotally mounted on the ring, and extending in their rest position along the length of the axis of the ring,

wherein, a first end of each of the bars extends from one side of the pivot point, and the second end of the bars extends from the other side of the pivot point.

Another aspect of the invention provides a kit comprising a device according to the invention in combination with a sealing sleeve.

A third aspect of the invention provides a method of expanding a sealing sleeve comprising :

(a) positioning inside the sleeve a device comprising

(1) an annular ring ; and

(2) a plurality of bars which are pivotally mounted on the ring and extend in their rest position along the length of the sleeve, a first end of the bars extending from one side of the pivot point, and a second end of the bars extending from the other side of the pivot point ;

(b) forcing the first end of the each of the bars radially inwards causing the second end of each of the bars, to urge the sleeve radially outwards.

Preferably the device is arranged so that the bars extend wholly within the sealing sleeve and do not project from either end.

Any number of bars may be used. Preferably they are positioned uniformly around the sleeve so that the second ends thereof provide a uniform expanding force on the sleeve.

In a preferred embodiment at least part of the sleeve, preferably one end only, of the sealing sleeve is recoverable, preferably heat recoverable.

A heat-recoverable article is an article the dimensional configuration of which may be made substantially to change when subjected to heat treatment.

Usually these articles recover, on heating, towards an original shape from which they have previously been deformed but the term "heat-recoverable", as used herein, also includes an article which, on heating, adopts a new configuration, even if it has not been previously deformed.

In their most common form, such articles comprise a heat-shrinkable sleeve made from a polymeric material exhibiting the property of elastic or plastic memory as described, for example, in US Patents 2027962, 3086242 and 3597372. As is made clear in, for example, US Patent 2027962, the original dimensionally heat-stable form may be a transient form in a continuous process in which, for example, an extruded tube is expanded, whilst hot, to a dimensionally heat-unstable form but, in other applications, a preformed dimensionally heat stable article is deformed to a dimensionally heat unstable form in a separate stage.

In the production of heat recoverable articles, the polymeric material may be cross-linked at any stage in the production of the article that will enhance the desired dimensional recoverability. One manner of producing a heat-recoverable article comprises shaping the polymeric material into the desired heat-stable form, subsequently cross-linking the polymeric material, heating the article to a temperature above the crystalline melting point, or, for amorphous materials the softening point, as the case may be, of the polymer, deforming the article and cooling the article whilst in the deformed state so that the deformed state of the article is retained. In use, since the deformed state of the article is heat-unstable, application of heat will cause the article to assume its original heat-stable shape.

In other articles, as described, for example, in British Patent 1,440,524, an elastomeric member such as an outer tubular member is held in a stretched state by a second member, such as an inner tubular member, which, upon heating weakens and thus allows the elastomeric member to recover.

Preferably the heat recoverable portion of the sealing sleeve used in the invention is radially shrinkable ; preferably radially heat-shrinkable. The radial shrinkage is preferably arranged to provide the force acting on the first end of each end of the bars.

The bar is described herein as having first and second ends. The first end is that part extending on one side of the pivot point, and the second end is that part extending on the other side of the pivot point.

Preferably the first end of each of the bars is longer than the second end. This enables the bar to act as a lever. Thus if a force X is provided on the first end of the bar by the recovery of the surrounding sleeve, a force larger than X is transmitted to the second end of the bars to effect the expansion. Thus even if the whole length of the sealing sleeve is shrinkable (which is not preferred) by using a lever principle the shrinkage at one end of the sleeve can be used to provide a transmitted force sufficient to overcome the shrinkage force at the other end of the sleeve and cause a resultant expansion of the other end of the sleeve.

In the most preferred case however only the end of the sleeve surrounding the first ends of the bars is recoverable (preferably radially shrinkable) and the other end is heat stable. The whole of the force transmitted from the first end to the second end of the bars can therefore be effective in expansion of the part of the sleeve surrounding the second end of the bars. In this case there is no counteracting shrinkage force around the second ends of the bars.

Thus in a most preferred embodiment one end of the sleeve is heat-recoverable and the other end is heat stable. The first, preferably longer, end of each of the bars is forced radially inwards by the heat recoverable part of the sleeve, and the second end of the sleeve is consequentially urged radially outwards to deform the heat stable end of the sleeve.

The sealing sleeve used in combination with the device is preferably polymeric. It is preferably tubular of closed cross-section or open cross-section (wraparound). It is preferably coated on one or both surfaces, at least in part with adhesive or sealant.

The ring and bars of the device of the invention may be inserted into the sealing sleeve in any configuration which allows the bars to be rotated by the shrinking sleeve. Preferably the ring is inserted so that it extends substantially circumferentially of the sleeve. The bars preferably extend generally parallel to the axis of the sleeve, i.e. substantially perpendicular to the plane of the ring.

The bars may be pivotally mounted on the annular ring in any suitable way. As an example the bar may be planar, and a tongue cut out of the bar to loop over the ring. As another example, the bar may pass through an aperture in the body of the ring. In a particularly preferred embodiment the bar is kinked immediately after passing through the ring. The kink region preferably rests in a channel on one face of the ring. This advantageously prevents ineffective lateral swinging of the bars.

The ends of the bars are preferably covered with a small polymeric end cap to prevent their sharp ends penetrating the sleeve around them.

The device of the present invention (in combination with a sealing sleeve), and the method of the invention may advantageously be applied for sealing a space between an elongate substrate and a passage through which it passes, for example as a feedthrough seal, or a duct seal. One end (preferably a heat stable end) of the sealing sleeve is inserted into the passage and the other end (preferably a heat shrinkable end) is allowed to project from the passage. The device is, for example, positioned in a passage (e.g. a hole or duct), in a wall such that the plane of the ring is substantially parallel to, and in the plane of, the wall surface. The first ends of the bars project within the sleeve from the wall, and the second ends of the bars extend within the sleeve within the passage. An elongate substrate (to be sealed to the passage) may then be passed, or may already be passing through the sleeve and passage. The part of the sleeve projecting from the passage is preferably then sealed to the elongate substrate to complete the seal between the substrate and the passage.

In preferred embodiments the part of the sleeve inside the passage is preferably also heated during the installation. Heating is desirable to soften the sleeve to make it more easily deformable. Also in preferred embodiments the part of the sleeve inside the passage is coated, on its outer surface, with heat-activatable adhesive. This is advantageously activated by the heating step. The heating of the part of the sleeve inside the passage may be applied by an external heat source before insertion of the sleeve into the passage. Preferably however, it is applied electrically after insertion of the sleeve in the passage.

Where the sleeve is electrically heatable, it preferably contains self contained heating means.

The self contained heating means may be integral with the article or fixed thereto. As an example a wire heat or a conductive polymeric strip heater may be fixed to the wrapped sheet and heated electrically. As another example the wrapped sheet may itself comprise conductive polymeric material, and the sheet electroded to pass electrical current through the sheet. Particularly preferred compositions and electrode configurations are described in British Patent Application 8729123 and 8729120.

On cooling the sleeve may contract slightly due to thermal contraction. This is undesirable inside the passage since it may cause the sleeve to pull away from the inside wall of the passage. However, outside the passage the thermal contraction shrinkage causes the first end of the bars to be urged further radially inward. This force consequently transmitted by the second end of the bars as an outward force on the sleeve inside the passage, thereby compensating for any thermal pull-away of the sleeve from the inside wall of the passage.

Embodiments of the present invention will now be described, by way of example, with reference to the accompanying drawings, wherein :

Figure 1 is a part perspective, part sectional, view of a device according to the invention in combination with a sealing sleeve ;

Figures 2 and 3 are side sectional views of the combination of Figure 1 used as a duct seal, before and after recovery respectively ; and

Figure 4 shows another embodiment of device according to the invention, in combination with a sleeve, used as a duct seal.

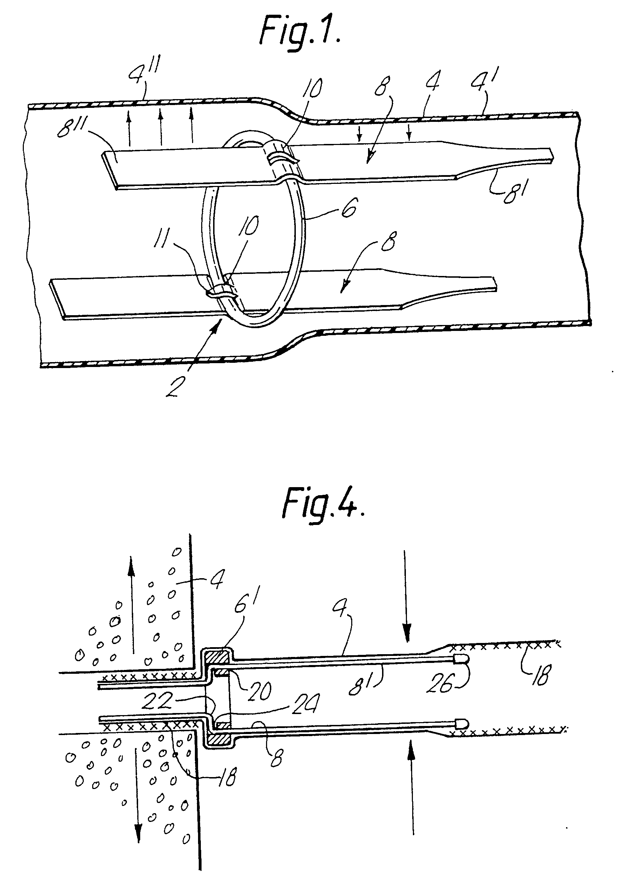

Referring to the drawings Figure 1 shows a device 2 according to the invention inside a polymeric sealing sleeve 4. The device 2 comprises an annular ring 6 and a plurality of bars 8 (only two of which are shown for clarity). The bars 8 are pivotally connected to ring 6 at pivot point 10. They are connected by tongues 11 cut out of each bar, which tongues 11 loop over the ring 6. One end 4′ of sleeve 4 is radially heat shrinkable. The other end 4″ is heat stable. A first end 8′ of the bars 8 extends in the heat-shrinkable part 4′ of sleeve 4. Second end 8″ of the bars 8 extends in the heat stable part 4″. First end 8′ is longer than second end 8″. In the rest position (as shown in Figure 1) the bars 8 extend generally parallel to the length of the sleeve 4.

In operation the sleeve 4 is heated. This causes shrinkable end 4′ to shrink radially inwards. This exerts an inward force on first end of bars 8′. The bars 8 therefore pivot about point 10 and the second end 8″ of the bars rotates outwards into contact with the sleeve. The end 8″ of the bars can deform the surrounding heat stable part of the sleeve 4″ outwards. The direction of rotation of bars 8 is shown by the arrows in Figure 1 (shown for one bar only).

The first end 8′ of the bars is longer than the second end 8″. Thus a lever principle exists. The radial inward force on ends 8′ is therefore transmitted as a magnified outward force at end 8″.

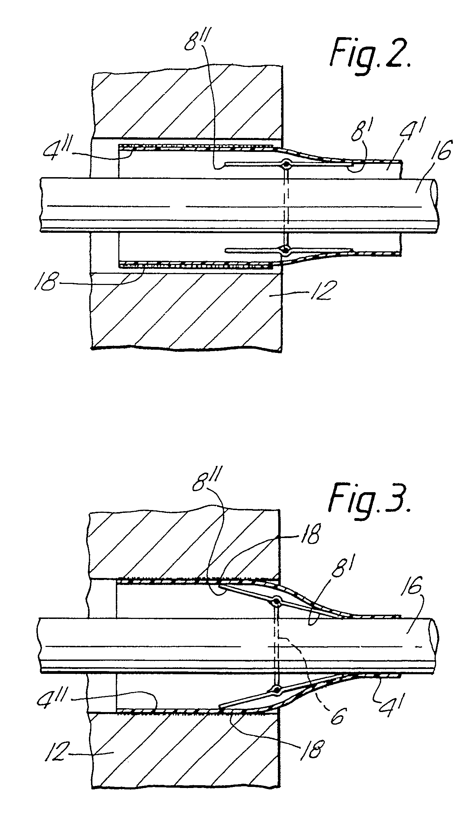

Figure 2 shows the device 2 and the sleeve 4 of Figure 1 installed in a duct in wall 12. The sleeve 4 is installed so that the shrinkable portion 4′ projects from the duct and the heat stable end 4″ extends within the duct. The device 2 lies in the plane of the wall. In the rest position, before installation (as shown in Figure 2) the bars 8 extend generally parallel to the axis of sleeve 4. A substrate 16 extends through the device 2 and sleeve 4. The outer surface of heat stable sleeve portion 4″, and the internal surface of heat shrinkable portion 4′ are coated with hot melt adhesive 18.

On application of heat, as described with reference to Figure 1, the shrinkable sleeve end 4′ causes rotation of bars 8. Thus the heat stable sleeve portion 4″ is deformed outwards.

The heat stable portion 4″ is also heated during installation to facilitate its deformation and to activate the hot-melt adhesive 18. This may be done electrically (not shown).

The installed duct seal is shown in Figure 3. End 4′ of the sleeve has shrunk into contact with the substrate 16, and end 4″ has been deformed into contact with the duct in wall 12, to which it is sealed by adhesive 18.

On cooling there may be some thermal contraction of sleeve 4. This causes shrinkage of both ends 4′ and 4″. However, the shrinkage of end 4′ causes rods 8 to pivot pushing sleeve end 4″ outwards against the duct wall. Thus any thermal contraction of sleeve end 4″ inside the duct is compensated for by the simultaneous rotation of bar 8.

Figure 4 shows another embodiment of device according to the invention, in combination with a sleeve, used as a duct seal. In this case the bars 8′ extend through an aperture 20 in ring 6′. Also the bars 8′ are kinked to form a step 22. The "riser" of the step sits in a channel 24 on the face of the ring 6' facing the wall 4. This stops lateral, ineffective swinging of the bars 10. The other parts of the device and sleeve are the same as in the embodiment of Figure 1 and are indicated by like reference numerals. The ends of bars 8 which extend from the duct are covered by polymeric caps 26. This prevents the bars puncturing the sleeve when the sleeve is recovered. The arrows in figure 4 indicate the direction of movement of the bars and the sleeve on installation of the duct. The end of the sleeve which projects from the wall is preferably also coated on its internal surface with adhesive 18, for sealing to a substrate passing therethrough.

## Claims

1. A device suitable for expanding a sealing sleeve comprising :

    (a) an annular ring which can be positioned inside the sleeve and

    (b) a plurality of bars pivotally mounted on the ring, and extending in their rest position along the length of the axis of the ring, wherein, a first end of each of the bars extends from one side of the pivot point and the second end of the bars extends from the other side of the pivot point.

2. A device according to claim 1 in combination with a sealing device.

3. A method of expanding a sealing sleeve comprising :

    (a) positioning inside the sleeve a device comprising

        (1) an annular ring ; and

        (2) a plurality of bars which are pivotally mounted on the ring and extend in their rest position along the length of the sleeve, a first end of the bars extending from one side of the pivot point, and a second end of the bars extending from the other side of the pivot point ;

    (b) forcing the first end of each of the bars radially inwards causing the second end of each of the bars, to urge the sleeve radially outwards.

4. A device or method according to any preceding claim wherein at least part of the sleeve is recoverable radially inward, and the first end of each of the bars is forced radially inward by recovery of the sleeve.

5. A device or method according to any preceding claim, wherein the first end of the bars is longer than the second end.

6. A device or method according to any preceding claim wherein one end only of the sleeve is recoverable.

7. A device or method according to any preceding claim wherein one end of the sleeve is heat recoverable and the other end of the sleeve is heat stable, wherein the first end of each end of the bars is forced radially inwards by the heat recoverable part of the sleeve and the second end of each of the levers urges radially outwards to deform the heat stable end of the sleeve.

8. A device or method according to claim 7, wherein the ring is positioned so that the bars extends along both the heat shrinkable and heat stable parts of the sleeve.

9. A device or method according to any preceding claim wherein a longer length of each bar extends along the heat shrinkable part of the sleeve than along the heat stable part.

10. A seal for sealing a space between an elongate substrate and a passage in a wall through which it passes, the seal comprising a device according to any preceding claim in combination with a surrounding sealing sleeve, which combination is inserted, in use, into a passage such that the annular ring lies at the boundary of the wall.

11. A seal according to claim 10, which is a duct seal or feedthrough seal.

12. A seal according to claim 10 or 11, wherein the sealing sleeve has one heat recoverable end and one heat stable end, and wherein, in use, the heat stable end is inserted into the passage, and the heat recoverable end projects from the passage.

## Ansprüche

1. Einrichtung, die zum Ausdehnen einer Dichtungsmuffe geeignet ist, umfassend :

    a) einen kreisförmigen Ring, der innerhalb der Muffe positioniert werden kann, und

    b) eine Vielzahl von Stäben, die gelenkig an dem Ring angebracht sind und sich in ihrer Ruhestellung in der Längsrichtung der Achse des Ringes erstrecken, wobei ein erstes Ende von jedem der Stäbe sich von der einen Seite des Gelenkpunktes aus erstreckt und das zweite Ende der Stäbe sich von der anderen Seite des Gelenkpunktes aus erstreckt.

2. Einrichtung nach Anspruch 1 in Kombination mit einer Dichtungseinrichtung.

3. Verfahren zum Ausdehnen einer Dichtungsmuffe, umfassend :

    a) Positionieren einer Einrichtung im Inneren der Muffe, wobei die Einrichtung folgendes aufweist:

        1) einen kreisförmigen Ring ; und

        2) eine Vielzahl von Stäben, die gelenkig an dem Ring montiert sind und sich in ihrer Ruhestellung über die Länge der Muffe erstrecken, wobei ein erstes Ende der Stäbe sich von der einen Seite des Gelenkpunktes aus erstreckt und ein zweites Ende der Stäbe sich von der anderen Seite des Gelenkpunktes aus erstreckt ;

    b) Zwingen des ersten Endes von jedem der Stäbe radial nach innen, um zu bewirken, daß das zweite Ende von jedem der Stäbe die Muffe radial nach außen drängt, um die Muffe aufzuweiten.

4. Einrichtung oder Verfahren nach einem der vorherigen Ansprüche, wobei zumindest ein Teil der Muffe radial nach innen rückstellbar ist und das erste Ende von jedem der Stäbe durch die Rückstellung der Muffe radial nach innen gezwungen wird.

5. Einrichtung oder Verfahren nach einem der vorherigen Ansprüche, wobei das erste Ende der Stäbe länger ist als das zweite Ende.

6. Einrichtung oder Verfahren nach einem der vorherigen Ansprüche, wobei nur das eine Ende der Muffe rückstellbar ist.

7. Einrichtung oder Verfahren nach einem der vorherigen Ansprüche, wobei das eine Ende der Muffe wärmerückstellbar und das andere Ende der Muffe wärmestabil ist, wobei das erste Ende von jedem Ende der Stäbe durch das wärmerückstellbare Teil der Muffe radial nach innen gezwungen wird und das zweite Ende von jedem der Hebel radial nach außen drängt, um das wärmestabile Ende der Muffe zu verformen.

8. Einrichtung oder Verfahren nach Anspruch 7, wobei der Ring so positioniert ist, daß die Stäbe sich sowohl längs der wärmeschrumpfbaren als auch der wärmestabilen Teile der Muffe erstrecken.

9. Einrichtung oder Verfahren nach einem der vorherigen Ansprüche, wobei eine größere Länge jedes Stabes sich längs des wärmeschrumpfbaren Teiles der Muffe als längs des wärmestabilen Teiles erstreckt.

10. Dichtung zum Abdichten eines Raumes zwischen einem länglichen Substrat und einem Durchgang in einer Wand, durch welche es hindurch geht, wobei die Dichtung eine Einrichtung nach einem der vorherigen Ansprüche in Kombination mit einer umgebenden Dichtungsmuffe aufweist, wobei die Kombination bei Benutzung in einen Durchgang derart eingesetzt wird, daß der kreisförmige Ring an der Grenze der Wand liegt.

11. Dichtung nach Anspruch 10, die eine Leitungsdichtung oder eine Durchführungsdichtung ist.

12. Dichtung nach Anspruch 10 oder 11, wobei die Dichtungsmuffe ein wärmerückstellbares Ende und ein wärmestabiles Ende aufweist und wobei bei Benutzung das wärmestabile Ende in den Durchgang eingesetzt wird und das wärmerückstellbare Ende aus dem Durchgang heraus vorsteht.

**Revendications**

1. Dispositif convenant pour expanser un manchon d'étanchéité, comportant :

(a) une bague annulaire qui peut être placée à l'intérieur du manchon, et

(b) plusieurs barres montées de façon pivotante sur la bague, et s'étendant, dans leur position de repos, sur la longueur de l'axe de la bague, dans lequel une première extrémité de chacune des barres s'étend à partir d'un premier côté du point de pivotement et la seconde extrémité des barres s'étend à partir de l'autre côté du point de pivotement.

2. Dispositif selon la revendication 1 en combinaison avec un dispositif d'étanchéité.

3. Procédé pour expanser un manchon d'étanchéité, consistant :

(a) à placer à l'intérieur du manchon un dispositif comportant

(1) une bague annulaire ; et

(2) plusieurs barres qui sont montées de façon pivotante sur la bague et s'étendent, dans leur position de repos, sur la longueur du manchon, une première extrémité des barres s'étendant à partir d'un premier côté du point de pivotement et une seconde extrémité des barres s'étendant à partir de l'autre côté du point de pivotement ;

(b) à forcer radialement vers l'intérieur la première extrémité de chacune des barres, amenant la seconde extrémité de chacune des barres à pousser radialement vers l'extérieur sur le manchon pour l'expanser.

4. Dispositif ou procédé selon l'une quelconque des revendications précédentes, dans lequel au moins une partie du manchon est douée de reprise de forme radialement vers l'intérieur, et la première extrémité de chacune des barres est forcée radialement vers l'intérieur par une reprise de forme du manchon.

5. Dispositif ou procédé selon l'une quelconque des revendications précédentes, dans lequel la première extrémité des barres est plus longue que la seconde extrémité.

6. Dispositif ou procédé selon l'une quelconque des revendications précédentes, dans lequel une extrémité seulement du manchon est douée de reprise de forme.

7. Dispositif ou procédé selon l'une quelconque des revendications précédentes, dans lequel une extrémité du manchon est douée de reprise de forme à chaud et l'autre extrémité du manchon est stable à la chaleur, la première de chaque extrémité des barres étant forcée radialement vers l'intérieur par la partie douée de reprise de forme à chaud du manchon et la seconde extrémité de chacun des leviers poussant radialement vers l'extérieur pour déformer l'extrémité stable à la chaleur du manchon.

8. Dispositif ou procédé selon la revendication 7, dans lequel la bague est disposée de manière que les barres s'étendent le long à la fois de la partie thermorétractable et les parties stables à la chaleur du manchon.

9. Dispositif ou procédé selon l'une quelconque des revendications précédentes, dans lequel une plus grande longueur de chaque barre s'étend le long de la partie thermorétractable du manchon que le long de la partie stable à la chaleur.

10. Joint d'étanchéité pour obturer de façon étanche un espace entre un substrat allongé et un passage dans un mur dans lequel il passe, le joint d'étanchéité comportant un dispositif selon l'une quelconque des revendications précédentes en combinaison avec un manchon d'étanchéité qui l'entoure, laquelle combinaison est insérée, lors de l'utilisation, dans un passage afin que la bague annulaire s'étende à la limite du mur.

11. Joint d'étanchéité selon la revendication 10, qui est un joint d'étanchéité de gaine ou un joint d'étanchéité de traversée.

12. Joint d'étanchéité selon la revendication 10 ou 11, dans lequel le manchon d'étanchéité comporte une extrémité douée de reprise de forme à chaud et une extrémité stable à la chaleur, et dans lequel, lors de l'utilisation, l'extrémité stable à la chaleur est insérée dans le passage et l'extrémité douée de reprise de forme à chaud dépasse du passage.

## Fig.1.

## Fig.4.

Fig.2.

Fig.3.